(19) **Europäisches Patentamt European Patent Office Office européen des brevets**

(11) **EP 3 421 566 B1**

(12) **EUROPEAN PATENT SPECIFICATION**

(45) Date of publication and mention
of the grant of the patent:
**29.11.2023 Bulletin 2023/48**

(21) Application number: **17756546.2**

(22) Date of filing: **22.02.2017**

(51) International Patent Classification (IPC):
**C09J 7/26** (2018.01)     **B32B 27/00** (2006.01)
**C08J 9/04** (2006.01)      **C09J 133/00** (2006.01)

(52) Cooperative Patent Classification (CPC):
(C-Sets available)
**B32B 27/00; C08J 9/04; C09J 7/26; C09J 133/00;**
C09J 2301/124; C09J 2301/414; C09J 2423/046;
C09J 2423/106; C09J 2433/00              (Cont.)

(86) International application number:
**PCT/JP2017/006639**

(87) International publication number:
**WO 2017/146108 (31.08.2017 Gazette 2017/35)**

(54) **TWO-SIDED ADHESIVE TAPE, TWO-SIDED ADHESIVE TAPE FOR VEHICLE-MOUNTED COMPONENT FIXATION, AND TWO-SIDED ADHESIVE TAPE FOR VEHICLE-MOUNTED HEAD-UP DISPLAY COVER**

ZWEISEITIGES KLEBEBAND, ZWEISEITIGES KLEBEBAND ZUR BEFESTIGUNG EINER FAHRZEUGMONTIERTEN KOMPONENTE UND ZWEISEITIGES KLEBEBAND FÜR EINE FAHRZEUGMONTIERTE ABDECKUNG EINER HEAD-UP-ANZEIGE

BANDE ADHÉSIVE DOUBLE FACE, BANDE ADHÉSIVE DOUBLE FACE DESTINÉE À UNE FIXATION DE COMPOSANT MONTÉE SUR UN VÉHICULE, ET BANDE ADHÉSIVE DOUBLE FACE DESTINÉE À UN COUVERCLE D'AFFICHAGE VERTICAL MONTÉ SUR UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2016 JP 2016031017**

(43) Date of publication of application:
**02.01.2019 Bulletin 2019/01**

(73) Proprietor: **Sekisui Chemical Co., Ltd.
Osaka-shi, Osaka 530-0047 (JP)**

(72) Inventors:
• **KATAOKA, Hiroyuki
  Shiga 522-0314 (JP)**
• **UCHIDA, Noriyuki
  Shiga 522-0314 (JP)**

(74) Representative: **Cabinet Beau de Loménie
158, rue de l'Université
75340 Paris Cedex 07 (FR)**

(56) References cited:
WO-A1-2013/154137     WO-A1-2015/046526
WO-A1-2016/052557     CN-A- 104 774 570
JP-A- 2004 182 897     JP-A- 2004 204 154
JP-A- 2012 214 626     JP-A- 2012 214 626
JP-A- 2015 155 528     JP-A- 2015 155 528

• **Karsten Beutner ET AL: "Polyethylene", Römpp online 4.0, 1 December 2009 (2009-12-01), pages 1-6, XP055614634, Retrieved from the Internet: URL:https://roempp.thieme.de/roempp4.0/do/ data/RD-16-03243 [retrieved on 2019-08-22]**

(52) Cooperative Patent Classification (CPC): (Cont.)

C-Sets
C09J 2423/046, C09J 2423/106

**Description**

TECHNICAL FIELD

The present invention relates to a two-sided adhesive tape excellent in heat resistance and repulsion resistance and less likely to peel off especially when used for fixing covers of in-vehicle panels or in-vehicle head-up displays, and a use of the two-sided adhesive tape for fixing an in-vehicle component like an in-vehicle head-up display cover.

BACKGROUND ART

In vehicles such as automobiles, two-sided adhesive tapes are used for fixing in-vehicle components on vehicle bodies. In such use for fixing an in-vehicle component, arrangement of components upon fixing and design of a device body are studied to avoid detachment or damage of the component on impact. Two-sided adhesive tapes used for fixing an in-vehicle component are desired to prevent detachment of the component on impact or application of strong impact on the component. Along with the recent demand for smaller and thinner electronic devices, in-vehicle components have been also desired to be smaller and thinner.

As such a two-sided adhesive tape excellent in impact resistance, JP 2009-242541 A and JP 2009-258274 A each disclose an impact-absorbing tape including a substrate layer and an acrylic adhesive layer laminated at least on one surface of the substrate layer to be integrated therewith, wherein the substrate layer is formed of a crosslinked polyolefin resin foamed sheet having a specific crosslinking degree and a specific aspect ratio of bubbles. However, in the case where covers of recent in-vehicle components such as in-vehicle panels and in-vehicle head-up displays are fixed with a two-sided adhesive tape including a conventional foamed sheet as a substrate, detachment of the component often occurs. In particular, detachment of the component is likely to occur in the case where a thin two-sided adhesive tape is used.

An adhesive tape in which an adhesive layer is laminated to at least one surface of a cross-linked polyolefin-based foamed sheet containing an ethylene-propylene copolymer is shown in JP 2012-214626 A.

A double-sided adhesive sheet containing a polyolefin resin foam base material with a first adhesive layer provided on a first surface of this foam base material and a second adhesive layer provided on a second surface is provided according to JP 2015-155528 A.

SUMMARY OF INVENTION

- Technical Problem

The present inventors studied about the cause of the detachment when covers of in-vehicle panels or in-vehicle head-up displays are fixed with a two-sided adhesive tape including a conventional foamed sheet as a substrate, and focused on the heat resistance of the two-sided adhesive tape. In-vehicle panels or in-vehicle head-up displays are commonly mounted under the windshield. The windshield may have a temperature exceeding 100°C in summer season because it is directly exposed to sunlight. A two-sided adhesive tape including a conventional foamed sheet as a substrate tends to have the substrate shrunk under exposure to such high temperatures, resulting in reduction in the adhesive force to cause detachment. In addition, since recent in-vehicle panels or in-vehicle head-up displays often have excellent designs including multiple curved faces, a two-sided adhesive tape attached to such a curved face is more likely to peel off due to the repulsive power.

The present invention aims to provide, in consideration of the state of the art, a two-sided adhesive tape excellent in heat resistance and repulsion resistance and less likely to peel off especially when used for fixing covers of in-vehicle panels or in-vehicle head-up displays, and a use of the two-sided adhesive tape for fixing an in-vehicle component like an in-vehicle head-up display cover.

- Solution to problem

The present invention is defined in the claims and specifically described in the following.

In the case where a two-sided adhesive tape including a substrate and an acrylic adhesive layer on both surfaces of the substrate includes a foam as the substrate and the foam has a crystal melting peak temperature, an expansion ratio, and an aspect ratio of bubbles each adjusted within a specific range, even a thin two-sided adhesive tape can have better heat resistance to be less likely to peel off under high temperatures to which the adhesive tape may be exposed in the use for fixing an in-vehicle component, and can exhibit repulsion resistance to be less likely to peel off even when attached to a curved face.

The two-sided adhesive tape of the present invention includes an acrylic adhesive layer on both surfaces of the substrate.

The substrate is formed of a foam. The foam may have a sheet shape.

The foam has a crystal melting peak temperature measured with a differential scanning calorimeter of 140°C or higher. The foam has an expansion ratio of 15 cm$^3$/g or less. The foam has an aspect ratio of bubbles (average bubble size in MD/average bubble size in TD) of 0.9 to 3. The use of such a foam as a substrate allows the two-sided adhesive tape of the present invention to exhibit high heat resistance to be less likely to peel off even under high temperatures to which the adhesive tape may be exposed in the use for fixing an in-vehicle component, and to exhibit repulsion resistance to be less likely to peel off even when attached to a curved face.

The foam is a polyolefin foam, which is an ethylene-propylene random copolymer containing propylene as a main component, optionally with ethylene-propylene block copolymers containing propylene as a main component and/or homopolypropylene resins. The ethylene-propylene random copolymer containing propylene as a main component allows the polyolefin foam to be obtained readily and to have both heat resistance and repulsion resistance. Low-temperature resistance of a polypropylene resin is improved by an ethylene-propylene block copolymer containing propylene as a main component.

Here, the phrase "containing as a main component" means that the propylene content of the copolymer is 50% by weight or more.

In the ethylene-propylene block copolymer, ethylene block parts and propylene block parts form a sea-island structure. The sea-island structure preferably includes the propylene block parts as sea phases and the ethylene block parts as island phases. In this case, the state of dispersion of the ethylene block parts as the island phases in the propylene block parts as the sea phases is not particularly limited. The ethylene block parts are dispersed as the island phases having an average particle size of preferably 30 μm or less, more preferably 10 μm or less, still more preferably 3 μm or less, particularly preferably 1 um or less because distribution of the crosslink structure in the polyolefin foam to be obtained becomes more uniform to allow the uniform properties, such as strength, heat resistance, and dispersibility, throughout the foam.

The state of dispersion and the average particle size of the island phases, i.e., the ethylene block parts, can be measured by the following methods.

The ethylene block parts in the ethylene-propylene block copolymer are dyed with ruthenium oxide and microphotographed at a magnification of 5,000 to 50,000 times. The obtained micrograph is image-processed, and the average particle size of the ethylene block parts is calculated. In the present invention, an image processor (product name "HI-PIAS IV") available from PIAS is used for the calculation of the average particle size of the ethylene block parts.

The elution amount at 0°C of the polypropylene resin by cross fractionation chromatography is not particularly limited. The lower limit thereof is preferably 1% by weight and the upper limit thereof is preferably 50% by weight. With the elution amount at 0°C within this range, the heat resistance and repulsion resistance of the polyolefin foam to be obtained can be further enhanced. The lower limit of the elution amount at 0°C is more preferably 3% by weight and the upper limit thereof is more preferably 30% by weight. The lower limit is still more preferably 5% by weight and the upper limit is still more preferably 25% by weight.

The elution amount at 100°C of the polypropylene resin by cross fractionation chromatography is not particularly limited. The lower limit thereof is preferably 5% by weight and the upper limit thereof is preferably 95% by weight. With the elution amount at 100°C within this range, the heat resistance and repulsion resistance of the polyolefin foam to be obtained can be further enhanced. The lower limit of the elution amount at 100°C is more preferably 15% by weight, still more preferably 30% by weight, particularly preferably 50% by weight.

The cross fractionation chromatography is carried out by the following method.

First, the polypropylene resin is dissolved in o-dichlorobenzene at 140°C to prepare a solution. The solution is cooled at a constant rate to allow formation of thin polymer layers of the polypropylene resin on the surface of a preliminarily prepared inert carrier in descending order of crystallinity and in descending order of weight average molecular weight. Next, the temperature is increased continuously or step by step, and the concentrations of eluted components are sequentially detected, thereby determining the composition distribution (crystallinity distribution). At the same time, the weight average molecular weight and molecular weight distribution of the eluted polypropylene resin component are measured by high temperature-type GPC. Thus, the weight average molecular weights of the eluted components in a predetermined temperature range are calculated.

Accordingly, the molecular weight distribution of the polypropylene resin at each degree of crystallinity can be measured based on the above measurement, and the elution amount in a predetermined temperature range and the weight average molecular weight in that range can be calculated. Specifically, for example, a cross fractionation chromatograph equipped with the above system (e.g., "CFC-T150A type" available from Mitsubishi Yuka Kabushiki Kaisha) can be used.

The melt flow rate (hereafter, also referred to as "MFR") of the polypropylene resin is not particularly limited. The lower limit thereof is preferably 0.1 g/10 min and the upper limit thereof is preferably 70 g/10 min. With the MFR within this range, the heat resistance of the polyolefin foam to be obtained is further enhanced. The upper limit of the MFR is more preferably 50 g/10 min or less, still more preferably 5 g/10 min or less.

The MFR as used herein refers to a value measured under the conditions of a temperature of 230°C and a load of 21.2 N in conformity with JIS K 7210.

The lower limit of the polypropylene resin content of the polyolefin foam is 30% by weight and the upper limit thereof is 90% by weight. With the polypropylene resin content within this range, the polyolefin foam to be obtained can achieve both heat resistance and repulsion resistance. With the polypropylene resin content of less than 30% by weight, the polyolefin foam to be obtained cannot exhibit sufficient heat resistance. With the polypropylene resin content of more than 90% by weight, the polyolefin foam to be obtained is hard and therefore easily peels off due to repulsion when applied to a curved face. The lower limit of the polypropylene resin content is more preferably 40% by weight and the upper limit thereof is more preferably 60% by weight.

In the case where the polypropylene resin is composed of a copolymer of propylene and another monomer, the properties as polypropylene are strongly exhibited when the proportion of the propylene constitutional unit in the copolymer is 80% by weight or more. In such a case, the entire amount of the copolymer is calculated as the amount of polypropylene in the present invention.

The polyolefin foam containing the polypropylene resin preferably contains a polyolefin resin other than the polypropylene resin.

The polyolefin resin other than the polypropylene resin is not particularly limited, and examples thereof include polyethylene, ethylene-propylene copolymers containing ethylene as a main component, olefin elastomers, and styrene elastomers. These polyolefin resins other than the polypropylene resin may be used alone or in combination of two or more thereof. Preferred among these is polyethylene because the heat resistance and repulsion resistance of the polyolefin foam to be obtained are further enhanced.

The polyethylene is not particularly limited, and examples thereof include low-density polyethylene, medium-density polyethylene, high-density polyethylene, linear low-density polyethylene, and ethylene-$\alpha$-olefin copolymers containing ethylene as a main component. These polyethylenes may be used alone or in combination of two or more thereof.

The MFR of the polyolefin resin other than the polypropylene resin is not particularly limited. The lower limit thereof is preferably 0.5 g/10 min and the upper limit thereof is preferably 70 g/10 min. The MFR within this range facilitates formation of a polyolefin foam having high heat resistance. The lower limit of the MFR is more preferably 1.5 g/10 min and the upper limit thereof is more preferably 50 g/10 min. The lower limit is still more preferably 2 g/10 min and the upper limit is still more preferably 30 g/10 min.

The polyolefin foam may contain another resin in addition to the polypropylene resin and the polyolefin resin other than the polypropylene resin as long as the effects of the present invention are not impaired.

The crystal melting peak temperature of the foam measured with a differential scanning calorimeter is not particularly limited as long as it is 140°C or higher. The lower limit thereof is preferably 145°C and the upper limit thereof is preferably 175°C. The crystal melting peak temperature within this range can further enhance the heat resistance of the foam to be obtained. The lower limit of the crystal melting peak temperature is more preferably 147°C, still more preferably 149°C, particularly preferably 152°C.

The crystal melting peak temperature of the foam measured with a differential scanning calorimeter can be adjusted by the material, expansion ratio, thickness, or the like of the foam.

The crystal melting peak temperature measured with a differential scanning calorimeter as used herein refers to a peak temperature obtained in the measurement performed on 100 mg of a foam with a differential scanning calorimeter in the air at a rate of temperature rise of 10°C/min. Specific examples of the differential scanning calorimeter include "220C" available from Seiko Instruments Inc.

The upper limit of the expansion ratio of the foam is 15 cm$^3$/g. With the expansion ratio of the foam within this range, the two-sided adhesive tape to be obtained can achieve both high impact resistance and high repulsion resistance. The lower limit of the expansion ratio of the foam is not particularly limited, and is preferably 3 cm$^3$/g. With the expansion ratio of the foam of less than 3 cm$^3$/g, the repulsive power as a substrate is too strong and therefore, the repulsion resistance is lowered. As a result, the two-sided adhesive tape to be obtained is likely to peel off when attached to a curved face. With the expansion ratio of the foam of more than 15 cm$^3$/g, the strength of the substrate is insufficient. As a result, the substrate may be stretched or broken in the thickness direction when the two-sided adhesive tape to be obtained is attached to a curved face. The lower limit of the expansion ratio of the foam is preferably 4 cm$^3$/g and the upper limit thereof is preferably 8 cm$^3$/g. The lower limit is more preferably 4.5 cm$^3$/g and the upper limit is more preferably 6 cm$^3$/g.

The expansion ratio of the foam can be adjusted by the material, thickness, or the like of the foam.

The expansion ratio of the foam can be calculated from the reciprocal of the density of the foam. For example, the expansion ratio can be measured in conformity with JIS K 7222.

The aspect ratio (average bubble size in MD/average bubble size in TD) of bubbles in the foam is 0.9 to 3. When the aspect ratio of bubbles, i.e., the ratio between the average bubble size in MD and the average bubble size in TD is small, the expansion ratio may be lowered to lower the repulsion resistance. Also, the thickness, repulsion resistance, and tensile strength of the foam may vary. When the aspect ratio of bubbles is large, the repulsion resistance of the foam is lowered. The lower limit of the aspect ratio of bubbles is preferably 1.2 and the upper limit thereof is preferably 2. The lower limit is more preferably 1.4 and the upper limit is more preferably 1.5.

The aspect ratio of bubbles in the foam can be adjusted by the material, expansion ratio, thickness or the like of the foam.

Here, MD represents the machine direction of the foam which refers to the direction in which the foam is extruded into a sheet, and TD represents the transverse direction of the foam which refers to the direction orthogonal to the machine direction (MD) in a plan view from the thickness direction of the foam (direction in which an adhesive layer is stacked on the foam serving as a substrate).

Next, the average bubble size in MD of the foam is measured by the following procedure. Specifically, the foam is cut along its total length at a substantially center part in TD in a plane parallel to the thickness direction. Then, the cut face of the foam is magnified by 60 times using a scanning electron microscope (SEM) and photographed in such a manner that the total length in the thickness direction of the foam is fit in the photograph.

A straight line is drawn on the obtained photograph, at the part corresponding to the center part in the thickness direction of the foam, to have a length of 15 cm (corresponding to the actual length of 2500 $\mu$m before magnification) in a direction parallel to the surface of the foam. Next, the number of bubbles present on the straight line is visually counted and the average bubble size in MD is calculated using the following equation: Average bubble size in MD ($\mu$m) = 2500 ($\mu$m)/number of bubbles (pcs).

The average bubble size in TD of the foam is measured by the following procedure. Specifically, the foam is cut in the thickness direction in a plane parallel to TD of the foam and parallel to the thickness direction of the foam. Then, the cut face of the foam is magnified by 60 times using a scanning electron microscope (SEM) and photographed in such a manner that the total length in the thickness direction of the foam is fit in the photograph. Based on the obtained photograph, the average bubble size in TD is calculated in the same manner as in the measurement of the average bubble size in MD of the foam.

When the number of bubbles present on the straight line is counted in the measurement of the average bubble size described above, the bubble size is determined based only on the cross sections of the bubbles in the photograph. Specifically, there may be a case where bubbles that appear to be completely separated by bubble walls in the cross section of the foam are actually connected to each other at a part other than the cross section of the foam. In the present invention, however, whether or not the bubbles are connected to each other at a part other than the cross section of the foam is not taken into consideration. The bubble form is determined based only on the cross section of a bubble wall, and one void completely surrounded by the cross section of the bubble wall shown on the photograph is determined to be one bubble.

The state of being "present on the straight line" refers to a case where the straight line completely penetrates a bubble at any portion of the bubble. Concerning the end portions of the straight line, a bubble in which the straight line does not completely penetrate and an end portion of the straight line is present within the bubble is counted as 0.5 bubbles.

Bubbles are preferably not exposed on the surface in the thickness direction of the foam. The foam preferably has a skin layer on the surface in the thickness direction. The skin layer is a part of the foam not containing bubbles and occupying a certain thickness from the surface of the foam. When the foam contains bubbles exposed on the surface in the thickness direction or the bubbles exposed on the surface are broken, the two-sided adhesive tape obtained using the foam may have poor impact resistance or repulsion resistance.

The foam preferably has a 25% compression strength in the thickness direction of 50 kPa or more and 1,000 kPa or less. With the 25% compression strength of more than 1,000 kPa, the repulsion resistance of the foam is unfavorably lowered. From the standpoint of repulsion resistance, the lower limit of the 25% compression strength is more preferably 100 kPa and the upper limit thereof is more preferably 900 kPa.

The 25% compression strength in the thickness direction of the foam can be adjusted by the material, expansion ratio, thickness, or the like of the foam.

The 25% compression strength in the thickness direction of the foam can be measured in conformity with JIS K6767-7.2.3 (JIS2009).

The foam can be produced by a conventionally known method such as a method in which a resin composition as a raw material is optionally crosslinked and then foamed. Specifically, the foam can be produced by a method including the following steps (1) to (3). Examples of the production method of the foam further include a method disclosed in WO 2005/007731.

Step (1): A resin component including a polyolefin resin and a polyolefin resin other than a polypropylene resin, a heat-decomposable foaming agent, and other additives are supplied to an extruder, molten and kneaded, and extruded into a sheet to prepare a sheet-shaped polyolefin resin composition.

Step (2): The sheet-shaped polyolefin resin composition is crosslinked.

Step (3): The crosslinked sheet-shaped polyolefin resin composition is heated to foam the heat-decomposable foaming agent.

The heat-decomposable foaming agent blended into the polyolefin resin composition in Step (1) is not particularly limited. Examples thereof include azodicarbonamide, N,N'-dinitrosopentamethylenetetramine, and p-toluenesulfonylsemicarbazide. These heat-decomposable foaming agents may be used alone or in combination of two or more thereof. Preferred among these is azodicarbonamide.

The amount of the heat-decomposable foaming agent is not particularly limited. The lower limit thereof is preferably 1 part by weight and the upper limit thereof is preferably 12 parts by weight, relative to 100 parts by weight of the resin component. With the amount of the heat-decomposable foaming agent within the above range, the foaming properties of the polyolefin resin composition is improved and a polyolefin foam having a desired expansion ratio can be obtained. The upper limit of the amount of the heat-decomposable foaming agent is more preferably 8 parts by weight.

Examples of the other additives blended into the polyolefin resin composition include a decomposition temperature modifier, a crosslinking aid, and an antioxidant.

The decomposition temperature modifier is used to lower the decomposition temperature of the heat-decomposable foaming agent or accelerate the decomposition speed of the heat-decomposable foaming agent, thereby adjusting the surface state or the like of the foam. Examples of the decomposition temperature modifier include zinc oxide, zinc stearate, and urea.

The lower limit of the amount of the decomposition temperature modifier relative to 100 parts by weight of the polyolefin resin is preferably 0.01 parts by weight and the upper limit thereof is preferably 5 parts by weight.

The crosslinking aid is used to reduce the amount of ionizing radiation during the crosslinking of the polyolefin resin composition described later and prevent cleavage or degradation of resin molecules along with exposure to the ionizing radiation.

Examples of the crosslinking aid include polyfunctional monomers. Specific examples thereof include: compounds having three functional groups in one molecule such as trimethylolpropane trimethacrylate, trimethylolpropane triacrylate, trimellitic acid triallyl ester, 1,2,4-benzene tricarboxylic acid triallyl ester, and triallyl isocyanurate; compounds having two functional groups in one molecule such as 1,6-hexanediol dimethacrylate, 1,9-nonanediol dimethacrylate, 1,10-decanediol dimethacrylate, and divinylbenzene; and diallyl phthalate, diallyl terephthalate, diallyl isophthalate, ethyl vinyl benzene, neopentyl glycol dimethacrylate, lauryl methacrylate, and stearyl methacrylate. These crosslinking aids may be used alone or in combination of two or more thereof.

The lower limit of the amount of the crosslinking aid relative to 100 parts by weight of the resin component is preferably 0.2 parts by weight and the upper limit thereof is preferably 10 parts by weight. With the amount of the crosslinking aid within this range, the foam having a desired crosslinking degree can be stably obtained. In addition, control of the crosslinking degree of the foam is facilitated. The lower limit of the amount of the crosslinking aid is more preferably 0.3 parts by weight and the upper limit thereof is more preferably 5 parts by weight. The lower limit is still more preferably 0.5 parts by weight.

The antioxidant is added to prevent oxidative degradation due to heat. Examples of the antioxidant include phenol antioxidants such as 2,6-di-t-butyl-p-cresol.

In Step (2), the polyolefin resin composition is crosslinked, for example, by a method of exposing the polyolefin resin composition to ionizing radiation such as electron beams, $\alpha$ beams, $\beta$ beams, and $\gamma$ beams or by a method of preliminarily blending an organic peroxide into the polyolefin resin composition at the time of formation and then heating the polyolefin resin composition to decompose the organic peroxide. These methods may be used alone or in combination of two or more thereof. From the standpoint of uniform crosslinking, preferred among these is exposure to ionizing radiation.

The irradiation dose of ionizing radiation in the method of exposing the polyolefin resin composition to ionizing radiation is preferably adjusted such that the gel fraction is set to 5 to 45% by weight. Specifically, the irradiation dose is preferably 0.5 to 20 Mrad, more preferably 3 to 12 Mrad.

Examples of the organic peroxide used in the method of preliminarily blending an organic peroxide into the polyolefin resin composition include 1,1-bis(t-butyl peroxy)3,3,5-trimethylcyclohexane and 1,1-bis(t-butylperoxy)cyclohexane. These organic peroxides may be used alone or in combination of two or more thereof.

The lower limit of the amount of the organic peroxide relative to 100 parts by weight of the resin component is preferably 0.01 parts by weight and the upper limit thereof is preferably 5 parts by weight. With the amount of the organic peroxide within this range, the resin composition is readily crosslinked and the amount of a decomposition residue of the organic peroxide present in the polyolefin foam to be obtained can be reduced. The lower limit of the amount of the organic peroxide is more preferably 0.1 parts by weight and the upper limit thereof is more preferably 3 parts by weight.

In Step (3), the polyolefin resin composition is foamed by any method. Examples thereof include methods of heating the polyolefin resin composition by hot air, infrared rays, salt bath, oil bath, and the like. These foaming methods of the polyolefin resin composition may be used alone or in combination of two or more thereof. The foaming method of the polyolefin resin composition is not limited to the method of using a heat-decomposable foaming agent. Physical foaming by butane gas or the like may be employed.

In Step (3), the sheet-shaped polyolefin resin composition may be optionally stretched in either one direction of MD and TD or in both directions.

Examples of the method of stretching the sheet-shaped polyolefin resin composition include a method of foaming the polyolefin resin composition and then stretching the obtained foam and a method of stretching the polyolefin resin composition while foaming it. In the case of foaming the polyolefin resin composition and then stretching the obtained foam, the foam is preferably stretched while maintaining its molten state during the foaming without being cooled. Alternatively, the cooled foam may be heated again to be molten or softened, followed by stretching thereof.

The upper limit of the thickness of the substrate is 1,500 $\mu$m. Even when the thickness of the substrate is within this range to be thin, adjustment of the foam as described above allows the two-sided adhesive tape to be obtained to achieve both impact resistance and repulsion resistance. The lower limit of the thickness of the substrate is not particularly limited, and is preferably 100 $\mu$m. With the thickness of the substrate of less than 100 $\mu$m, the two-sided adhesive tape to be obtained may not exhibit sufficient impact resistance. The upper limit of the thickness of the substrate is preferably 1,000 $\mu$m. With the thickness of the substrate of more than 1,000 $\mu$m, the repulsion resistance may be lowered, so that the two-sided adhesive tape to be obtained is likely to peel off when attached to a curved face. The lower limit of the thickness of the substrate is more preferably 150 $\mu$m and the upper limit thereof is more preferably 900 $\mu$m. The lower limit is still more preferably 200 $\mu$m and the upper limit is still more preferably 800 $\mu$m.

The acrylic adhesive layer may be composed of any acrylic copolymer. For high adhesive force, the acrylic copolymer is preferably prepared by copolymerization of a monomer mixture containing butyl acrylate and 2-ethylhexyl acrylate.

The lower limit of the butyl acrylate content of the whole monomer mixture is preferably 40% by weight and the upper limit thereof is preferably 80% by weight. With the butyl acrylate content within this range, high adhesive force and high cohesive force can be both achieved.

The lower limit of the 2-ethylhexyl acrylate content of the whole monomer mixture is preferably 10% by weight and the upper limit thereof is preferably 40% by weight. With the 2-ethylhexyl acrylate content within this range, high adhesive force and high cohesive force can be both achieved.

The monomer mixture may optionally contain a different polymerizable monomer that is copolymerizable with butyl acrylate and 2-ethylhexyl acrylate.

Examples of the different polymerizable monomer include: (meth)acrylic acid alkyl esters having C1-C3 alkyl group such as methyl (meth)acrylate, ethyl (meth)acrylate, n-propyl (meth)acrylate, and isopropyl (meth)acrylate; (meth)acrylic acid alkyl esters having a C13-C18 alkyl group such as tridecyl methacrylate and stearyl (meth)acrylate; and functional monomers such as hydroxyalkyl (meth)acrylate, glycerin dimethacrylate, glycidyl (meth)acrylate, 2-methacryloyloxyethyl isocyanate, (meth)acrylic acid, itaconic acid, maleic anhydride, crotonic acid, maleic acid, and fumaric acid.

To obtain the acrylic copolymer by copolymerization of the monomer mixture, the monomer mixture may be radically reacted in the presence of a polymerization initiator. Examples of the method of subjecting the monomer mixture to a radical reaction, i.e., the method of polymerizing include a conventionally known method such as solution polymerization (boiling point polymerization or constant temperature polymerization), emulsion polymerization, suspension polymerization, and bulk polymerization.

The polymerization initiator is not particularly limited, and examples thereof include organic peroxides and azo compounds. Examples of the organic peroxides include 1,1-bis(t-hexylperoxy)-3,3,5-trimethylcyclohexane, t-hexylperoxypivalate, t-butylperoxypivalate, 2,5-dimethyl-2,5-bis(2-ethylhexanoylperoxy)hexane, t-hexylperoxy-2-ethylhexanoate, t-butylperoxy-2-ethylhexanoate, t-butylperoxyisobutyrate, t-butylperoxy-3,5,5-trimethylhexanoate, and t-butylperoxylaurate. Examples of the azo compounds include azobisisobutyronitrile and azobiscyclohexanecarbonitrile. These polymerization initiators may be used alone or in combination of two or more thereof.

The lower limit of the weight average molecular weight (Mw) of the acrylic copolymer is preferably 400,000 and the upper limit thereof is preferably 1,000,000. With the weight average molecular weight of less than 400,000, the cohesive force of the acrylic adhesive layer may be lowered and the shear adhesive strength of the two-sided adhesive tape may be lowered. With the weight average molecular weight of more than 1,000,000, the adhesive force of the acrylic adhesive layer may be lowered and the shear adhesive strength of the two-sided adhesive tape may be lowered. The lower limit of the weight average molecular weight is more preferably 500,000 and the upper limit thereof is more preferably 700,000.

For adjustment of the weight average molecular weight within the above range, the polymerization conditions such as the polymerization initiator used, the polymerization temperature, and the like may be adjusted.

The weight average molecular weight (Mw) is a weight average molecular weight in terms of standard polystyrene obtained by gel permeation chromatography (GPC).

The acrylic adhesive layer may contain a tackifier resin.

Examples of the tackifier resin include rosin ester resins, hydrogenated rosin resins, terpene resins, terpene phenol resins, coumarone indene resins, alicyclic saturated hydrocarbon resins, C5 petroleum resins, C9 petroleum resins, C5/C9 copolymerization petroleum resins. These tackifier resins may be used alone or in combination of two or more thereof.

The amount of the tackifier resin is not particularly limited. The lower limit of the amount of the tackifier resin relative to 100 parts by weight of the acrylic copolymer is preferably 10 parts by weight and the upper limit thereof is preferably 60 parts by weight. With the amount of the tackifier resin within this range, high adhesion force can be exhibited.

In the acrylic adhesive layer, a crosslinking agent is preferably added to form a crosslinking structure between the main chains of the resin (the acrylic copolymer and/or the tackifier resin) constituting the acrylic adhesive layer.

The crosslinking agent is not particularly limited, and examples thereof include isocyanate crosslinking agents, aziridine crosslinking agents, epoxy crosslinking agents, and metal chelate crosslinking agents. Preferred among these are isocyanate crosslinking agents. Addition of an isocyanate crosslinking agent to the acrylic adhesive layer allows the reaction between isocyanate groups in the isocyanate crosslinking agent and alcoholic hydroxy groups in the resin constituting the acrylic adhesive layer to loosen the crosslink of the acrylic adhesive layer. Accordingly, the peeling stress applied intermittently to the acrylic adhesive layer can be dispersed to further enhance the shear adhesive strength of the two-sided adhesive tape.

The lower limit of the amount of the crosslinking agent relative to 100 parts by weight of the acrylic copolymer is preferably 0.01 parts by weight and the upper limit thereof is preferably 10 parts by weight. The lower limit is more preferably 0.1 parts by weight and the upper limit is more preferably 3 parts by weight.

The crosslinking degree of the acrylic adhesive layer should not be too high or too low because the acrylic adhesive layer may easily peel off from the adherend under application of a large load in the shear direction in either case. The crosslinking degree of the acrylic adhesive layer is preferably 5 to 40% by weight, more preferably 10 to 40% by weight, particularly preferably 15 to 35% by weight.

The crosslinking degree of the acrylic adhesive layer can be obtained as follows. The acrylic adhesive layer in an amount of W1 (g) is sampled, and the acrylic adhesive layer is immersed in ethyl acetate at 23°C for 24 hours. The insoluble component is separated by filtering using a 200-mesh wire net, and the residue left on the wire net is vacuum-dried, followed by measurement of the weight W2 (g) of the dried residue. The obtained values are substituted into the following equation (1).

$$\text{The crosslinking degree (\% by weight)} = 100 \times W2/W1 \qquad (1)$$

The thickness of the acrylic adhesive layer is not particularly limited. The lower limit of the thickness of the acrylic adhesive layer on one side is preferably 10 $\mu$m and the upper limit thereof is preferably 100 $\mu$m. With the thickness of the acrylic adhesive layer within this range, high adhesive force and reworkability or re-peelability can be both achieved.

The lower limit of the total thickness of the two-sided adhesive tape of the present invention is preferably 30 $\mu$m and the upper limit thereof is preferably 2,000 $\mu$m. With the total thickness of the two-sided adhesive tape within this range, the two-sided adhesive tape can contribute to thinning of a part to which the two-sided adhesive tape is applied. Moreover, even in the case of such a thin two-sided adhesive tape, high impact resistance, adhesiveness, and repulsion resistance can be exhibited. The lower limit of the total thickness of the two-sided adhesive tape is more preferably 150 $\mu$m and the upper limit thereof is more preferably 1,100 $\mu$m. The lower limit of the total thickness of the two-sided adhesive tape is still more preferably 200 $\mu$m and the upper limit thereof is still more preferably 900 $\mu$m.

The two-sided adhesive tape of the present invention can be produced, for example, by the following method.

First, a solvent is added to an acrylic copolymer, a tackifier resin, and optionally a crosslinking agent and the like, thereby preparing a solution of an adhesive A. The solution of an adhesive A is applied to the surface of a substrate, and the solvent in the solution is completely dried to be removed. Thus, an acrylic adhesive layer A is formed. Next, a release film is placed on the acrylic adhesive layer A in such a manner that the release-treated surface of the release film faces the acrylic adhesive layer A.

Then, another release film is prepared and to the release-treated surface of the release film is applied a solution of an adhesive B. A solvent in the solution is completely dried to be removed. Thus, a laminated film including a release film and an acrylic adhesive layer B formed on the surface of the release film is produced. The obtained laminated film is placed on the rear surface of the substrate having the acrylic adhesive layer A formed thereon in such a manner that the acrylic adhesive layer B faces the rear surface of the substrate. The laminate is pressurized using a rubber roller or the like to provide a two-sided adhesive tape including a substrate and an acrylic adhesive layer on both surfaces of the substrate, in which the surface of each acrylic adhesive layer is covered with a release film.

In another method, two laminated films are produced in the same manner, and the laminated films are placed on both surfaces of a substrate in such a manner that the acrylic adhesive layer of the laminated film faces the substrate, thereby preparing a laminate. The laminate is pressurized using a rubber roller or the like to provide a two-sided adhesive tape including a substrate and an acrylic adhesive layer on both surfaces of the substrate, in which the surface of each acrylic adhesive layer is covered with a release film.

Owing to the above structure, the two-sided adhesive tape of the present invention can exhibit excellent heat resistance to be less likely to peel off even when used for fixing an in-vehicle component directly exposed to sunlight under the windshield, such as a cover of an in-vehicle panel and an in-vehicle head-up display.

Since the two-sided adhesive tape of the present invention is also excellent in repulsion resistance, the two-sided adhesive tape of the present invention is less likely to peel off even when applied to a curved face of a recent in-vehicle panel or in-vehicle head-up display having an excellent design including multiple curved faces. The application of the two-sided adhesive tape of the present invention is not particularly limited, and examples thereof include fixing of parts of a transportation device. In particular, the two-sided adhesive tape of the present invention is suitable as a two-sided adhesive tape for fixing an in-vehicle component, especially as a two-sided adhesive tape for fixing an in-vehicle panel cover or a two-sided adhesive tape for fixing an in-vehicle head-up display cover.

The two-sided adhesive tape of the present invention can be also suitably used for fixing a component included in a portable electronic device. Specifically, the two-sided adhesive tape of the present invention can be suitably used for bonding and fixing a component in a large portable electronic device.

The shape of the two-sided adhesive tape of the present invention in such applications is not particularly limited, and examples thereof include rectangular, frame, circular, elliptical, and doughnut shapes.

- Advantageous Effects of Invention

The present invention can provide a two-sided adhesive tape excellent in heat resistance and repulsion resistance and less likely to peel off when used especially for fixing covers of in-vehicle panels or in-vehicle head-up displays, and a use of the two-sided adhesive tape for fixing an in-vehicle component like an in-vehicle head-up display cover.

DESCRIPTION OF EMBODIMENTS

Embodiments of the present invention is more specifically described in the following with reference to, but not limited to, examples.

(Example 1)

(1) Preparation of a polyolefin foam

To a resin component containing 80 parts by weight of a polypropylene resin (ethylene-propylene random copolymer: product name "AD571" available from Sumitomo Chemical Co., Ltd., density of 0.90 g/cm$^3$, MFR of 0.5 g/10 min) and 20 parts by weight of a linear low-density polyethylene (product name "ZF231" available from Tosoh Corporation, MFR of 2 g/10 min, density of 0.917 g/cm$^3$) were added 7.5 parts by weight of azodicarbonamide (a heat-decomposable foaming agent) and 3 parts by weight of divinylbenzene (a crosslinking aid), and further added 0.3 parts by weight of 2,6-di-t-butyl-p-cresol (an antioxidant), 0.3 parts by weight of dilaurylthiopropionate (an antioxidant), and 0.5 parts by weight of methyl benzotriazole (a metal harm inhibitor). The obtained polyolefin resin composition was molten and kneaded at 185°C and extruded into a raw material sheet having a thickness of 600 um using a single screw extruder.

Both surfaces of the raw material sheet were irradiated with 1.5 Mrad of electron beam at an accelerating voltage of 800 kV to be crosslinked. The raw material sheet was continuously sent into a foaming furnace maintained at 250°C by hot air and an infrared heater, and heated to foam. Thus, a polyolefin foam having a thickness of 1,000 $\mu$m was obtained.

The expansion ratio of the obtained polyolefin foam was calculated based on the density measured using an electronic gravimeter (product name "ED120T") available from Alfa Mirage Inc., Ltd. in conformity with JIS K-6767. The crystal melting peak temperature, bubble aspect ratio, and 25% compression strength of the obtained polyolefin foam were obtained.

(2) Preparation of an adhesive

A reactor equipped with a thermometer, a stirrer, and a condenser tube was charged with 70 parts by weight of butyl acrylate, 27 parts by weight of 2-ethylhexyl acrylate, 3 parts by weight of acrylic acid, 0.2 parts by weight of 2-hydroxyethyl acrylate, and 80 parts by weight of ethyl acetate. The air inside the reactor was substituted with nitrogen. The reactor was then heated so that reflux started. Subsequently, to the reactor was added 0.1 parts by weight of azobisisobutyronitrile as a polymerization initiator. The reflux was allowed to be carried out at 70°C for five hours, thereby obtaining a solution of an acrylic copolymer. The weight average molecular weight of the obtained acrylic copolymer was measured by GPC using "2690 Separations model" available from Waters as a column, and was 710,000.

To the solution of the acrylic copolymer obtained were added 15 parts by weight of a polymerized rosin ester having a softening point of 150°C, 125 parts by weight of ethyl acetate (Fuji Chemicals Ltd.), and 1.5 parts by weight of an isocyanate crosslinking agent (product name "Coronate L45" available from Nippon Polyurethane Industry Co., Ltd.), based on 100 parts by weight of the solid content of the acrylic copolymer contained in the solution. The mixture was stirred to obtain an adhesive.

(3) Production of a two-sided adhesive tape

Release paper having a thickness of 150 $\mu$m was prepared. To the release-treated surface of the release paper was applied the adhesive, and the adhesive was dried at 100°C for five minutes. Thus, an acrylic adhesive layer having a thickness of 50 $\mu$m was formed. The acrylic adhesive layer was attached to the surface of the polyolefin foam. The same acrylic adhesive layer as the above acrylic adhesive layer was similarly attached to the other surface of the polyolefin foam. Then, the resulting laminate was allowed to stand under heating at 40°C for 48 hours. Thus, a two-sided adhesive tape was obtained.

(Example 2)

A polyolefin foam was obtained in the same manner as in Example 1, except that the amount of azodicarbonamide (a heat-decomposable foaming agent) was changed to 7 parts by weight.
A two-sided adhesive tape was obtained in the same manner as in Example 1, except that the obtained polyolefin foam was used.

(Example 3)

A polyolefin foam was obtained in the same manner as in Example 1, except that the amount of the polypropylene resin (ethylene-propylene random copolymer:"AD571" available from Sumitomo Chemical Co., Ltd., density of 0.90 g/cm$^3$, MFR of 0.5 g/10 min) was changed to 70 parts by weight, the amount of the linear low-density polyethylene ("ZF231" available from Tosoh Corporation, MFR of 2 g/10 min, density of 0.917 g/cm$^3$) was changed to 30 parts by weight, and the amount of azodicarbonamide (a heat-decomposable foaming agent) was changed to 7 parts by weight.
A two-sided adhesive tape was obtained in the same manner as in Example 1, except that the obtained polyolefin foam was used.

(Example 4)

A polyolefin foam having a thickness of 500 $\mu$m was obtained in the same manner as in Example 1, except that the amount of the polypropylene resin (ethylene-propylene random copolymer: "AD571" available from Sumitomo Chemical Co., Ltd., density of 0.90 g/cm$^3$, MFR of 0.5 g/10 min) was changed to 60 parts by weight, the amount of the linear low-density polyethylene (product name "ZF231" available from Tosoh Corporation, MFR of 2 g/10 min, density of 0.917 g/cm$^3$) was changed to 40 parts by weight, the amount of azodicarbonamide (a heat-decomposable foaming agent) was changed to 3.8 parts by weight, and the thickness of the raw material sheet was changed to 300 um.
A two-sided adhesive tape was obtained in the same manner as in Example 1, except that the obtained polyolefin foam was used.

(Example 5)

A polyolefin foam having a thickness of 200 $\mu$m was obtained in the same manner as in Example 1, except that the amount of the polypropylene resin (ethylene-propylene random copolymer: product name "AD571" available from Sumitomo Chemical Co., Ltd., density of 0.90 g/cm$^3$, MFR of 0.5 g/10 min) was changed to 60 parts by weight, the amount of the linear low-density polyethylene (product name "ZF231" available from Tosoh Corporation, MFR of 2 g/10 min, density of 0.917 g/cm$^3$) was changed to 40 parts by weight, the amount of azodicarbonamide (a heat-decomposable foaming agent) was changed to 3.5 parts by weight, and the thickness of the raw material sheet was changed to 150 um.
A two-sided adhesive tape was obtained in the same manner as in Example 1, except that the obtained polyolefin foam was used.

(Example 6)

A polyolefin foam having a thickness of 500 $\mu$m was obtained in the same manner as in Example 1, except that the amount of the polypropylene resin (ethylene-propylene random copolymer: product name "AD571" available from Sumitomo Chemical Co., Ltd., density of 0.90 g/cm$^3$, MFR of 0.5 g/10 min) was changed to 70 parts by weight, the amount of the linear low-density polyethylene (product name "ZF231" available from Tosoh Corporation, MFR of 2 g/10 min, density of 0.917 g/cm$^3$) was changed to 30 parts by weight, the amount of azodicarbonamide (a heat-decomposable foaming agent) was changed to 3.0 parts by weight, and the thickness of the raw material sheet was changed to 400 $\mu$m.

A two-sided adhesive tape was obtained in the same manner as in Example 1, except that the obtained polyolefin foam was used.

(Example 7)

A polyolefin foam having a thickness of 800 $\mu$m was obtained in the same manner as in Example 1, except that the amount of the polypropylene resin (ethylene-propylene random copolymer: product name "AD571" available from Sumitomo Chemical Co., Ltd., density of 0.90 g/cm$^3$, MFR of 0.5 g/10 min) was changed to 40 parts by weight, the amount of the linear low-density polyethylene (product name "ZF231" available from Tosoh Corporation, MFR of 2 g/10 min, density of 0.917 g/cm$^3$) was changed to 60 parts by weight, the amount of azodicarbonamide (a heat-decomposable foaming agent) was changed to 4.5 parts by weight, and the thickness of the raw material sheet was changed to 400 $\mu$m.

A two-sided adhesive tape was obtained in the same manner as in Example 1, except that the obtained polyolefin foam was used.

(Comparative Example 1)

A polyolefin foam having a thickness of 400 $\mu$m was obtained in the same manner as in Example 1, except that the amount of the polypropylene resin (ethylene-propylene random copolymer: product name "AD571" available from Sumitomo Chemical Co., Ltd., density of 0.90 g/cm$^3$, MFR of 0.5 g/10 min) was changed to 70 parts by weight, the amount of the linear low-density polyethylene (product name "ZF231" available from Tosoh Corporation, MFR of 2 g/10 min, density of 0.917 g/cm$^3$) was changed to 30 parts by weight, the amount of the azodicarbonamide (a heat-decomposable foaming agent) was changed to 4.5 parts by weight, and the thickness of the raw material sheet was changed to 200 $\mu$m.

A two-sided adhesive tape was obtained in the same manner as in Example 1, except that the obtained polyolefin foam was used.

(Comparative Example 2)

A polyolefin foam having a thickness of 800 $\mu$m was obtained in the same manner as in Example 1, except that the amount of the polypropylene resin (ethylene-propylene random copolymer: product name "AD571" available from Sumitomo Chemical Co., Ltd., density of 0.90 g/cm$^3$, MFR of 0.5 g/10 min) was changed to 0 parts by weight, the amount of the linear low-density polyethylene (product name "ZF231" available from Tosoh Corporation, MFR of 2 g/10 min, density of 0.917 g/cm$^3$) was changed to 100 parts by weight, the amount of azodicarbonamide (a heat-decomposable foaming agent) was changed to 4.5 parts by weight, and the thickness of the raw material sheet was changed to 400 um.

A two-sided adhesive tape was obtained in the same manner as in Example 1, except that the obtained polyolefin foam was used.

(Comparative Example 3)

A polyolefin foam having a thickness of 100 $\mu$m was obtained in the same manner as in Example 1, except that the amount of the polypropylene resin (ethylene-propylene random copolymer: product name "AD571" available from Sumitomo Chemical Co., Ltd., density of 0.90 g/cm$^3$, MFR of 0.5 g/10 min) was changed to 0 parts by weight, the amount of the linear low-density polyethylene (product name "ZF231" available from Tosoh Corporation, MFR of 2 g/10 min, density of 0.917 g/cm$^3$) was changed to 100 parts by weight, the amount of azodicarbonamide (a heat-decomposable foaming agent) was changed to 2.2 parts by weight, and the thickness of the raw material sheet was changed to 170 $\mu$m.

A two-sided adhesive tape was obtained in the same manner as in Example 1, except that the obtained polyolefin foam was used.

(Comparative Example 4)

A polyolefin foam having a thickness of 1,000 $\mu$m was obtained in the same manner as in Example 1, except that the amount of the polypropylene resin (ethylene-propylene random copolymer: product name "AD571" available from Sumitomo Chemical Co., Ltd., density of 0.90 g/cm$^3$, MFR of 0.5 g/10 min) was changed to 70 parts by weight, the amount of the linear low-density polyethylene (product name "ZF231" available from Tosoh Corporation, MFR of 2 g/10 min, density of 0.917 g/cm$^3$) was changed to 30 parts by weight, the amount of azodicarbonamide (a heat-decomposable foaming agent) was changed to 13 parts by weight, and the thickness of the raw material sheet was changed to 400 $\mu$m.

A two-sided adhesive tape was obtained in the same manner as in Example 1, except that the obtained polyolefin foam was used.

(Evaluation)

The two-sided adhesive tapes obtained in the examples and comparative examples were evaluated for the following parameters. Table 1 shows the results.

(1) Evaluation of heat resistance

A square sample (10 mm in length × 10 mm in width) was cut out from each obtained two-sided adhesive tape in such a manner that the each side was along MD or TD.
The obtained sample was left in an oven adjusted at 110°C for 500 hours, taken out from the oven, and left to be naturally cooled to 23°C.
The length of each side of the sample after the heat treatment was measured, and the shrinkage due to the heat treatment was calculated. A case where the shrinkage was 5% or lower in both MD and TD was rated "o (Good)" and the case where the shrinkage was more than 5% in either MD or TD or in both MD and TD was rated "× (Poor)".
In the case of "o (Good)", another sample was similarly prepared. The sample was left in an oven adjusted to 120°C for 500 hours, taken out from the oven, and left to be naturally cooled to 23°C. The shrinkage was similarly evaluated. A case where the shrinkage was 5% or lower in both MD and TD even after the heat treatment at 120°C was rated "oo (Excellent)". A case where the shrinkage was 5% or lower in both MD and TD after the heat treatment at 110°C but was more than 5% in either MD or TD or in both MD and TD after the heat treatment at 120°C was rated "o (Good)".

(2) Evaluation of repulsion resistance

A rectangular sample (150 mm in length × 25 mm in width) was cut out from each obtained two-sided adhesive tape in such a manner that the side in the lengthwise direction was along MD and the side in the crosswise direction was along TD. The one surface of the obtained sample was attached to a polycarbonate plate (150 mm in length × 25 mm in width × 1 mm in thickness) and the other surface of the sample was attached to a different polycarbonate plate (200 mm in length × 25 mm in width × 1 mm in thickness). They were pressure-bonded by one reciprocating motion of a 2-kg roller, and allowed to stand for 24 hours. Then, the sample was bent to change the length from 200 mm to 190 mm and fixed, thereby preparing a test sample.
The test sample was left in an oven adjusted to 110°C for 500 hours and then observed. A case where "lifting" was not at all observed was rated "o (Good)". A case where "lifting" was observed even in a part was rated "× (Poor)".
In the case of "o (Good)", another sample was similarly prepared. The sample was bent to change the length from 200 mm to 165 mm and fixed, thereby preparing a test sample. Occurrence of "lifting" was similarly evaluated. A case where "lifting" was not at all observed even when the sample was bent to 165 mm was rated "oo (Excellent)". A case where "lifting" was not at all observed when the sample was bent to 190 mm but "lifting" was observed in a part when the sample was bent to 165 mm was rated "o (Good)".

[Table 1]

| | Substrate | | | | | | | | Evaluation | |
|---|---|---|---|---|---|---|---|---|---|---|
| | Crystal melting peak temperature (°C) | Expansion ratio (cm³/g) | Aspect ratio of bubbles | Average bubble size in MD (μm) | Average bubblesize in TD (μm) | Polypropylene resin content (% by weight) | Compression strength (kPa) | Thickness (μm) | Heat resistance | Repulsion resistance |
| Example 1 | 142.6 | 13 | 1.4 | 298 | 217 | 80 | 132 | 1000 | ○○ | ○○ |
| Example 2 | 143.9 | 10 | 2.0 | 251 | 127 | 80 | 268 | 1000 | ○○ | ○○ |
| Example 3 | 147.4 | 10 | 1.2 | 226 | 195 | 70 | 86 | 1000 | ○○ | ○○ |
| Example 4 | 143.3 | 5 | 1.5 | 310 | 210 | 60 | 858 | 500 | ○○ | ○○ |
| Example 5 | 143.1 | 4.5 | 0.9 | 244 | 261 | 60 | 161 | 200 | ○ | ○○ |
| Example 6 | 143.2 | 3.5 | 1.5 | 220 | 150 | 70 | 1100 | 500 | ○○ | ○ |
| Example 7 | 141.5 | 8 | 1.2 | 220 | 190 | 40 | 110 | 800 | ○ | ○ |
| Comparative Example 1 | 143.9 | 8 | 0.5 | 155 | 289 | 70 | 51 | 400 | × | ○○ |
| Comparative Example 2 | 94 | 8 | 2.3 | 223 | 95.8 | 0 | 80 | 800 | × | ○○ |
| Comparative Example 3 | 92 | 3 | 0.5 | 188.5 | 371.3 | 0 | 75 | 100 | × | ○ |
| Comparative Example 4 | 142 | 20 | 1.4 | 300 | 220 | 70 | 40 | 1000 | ○○ | × |

INDUSTRIAL APPLICABILITY

The present invention can provide a two-sided adhesive tape excellent in heat resistance and repulsion resistance and less likely to peel off especially when used for fixing covers of in-vehicle panels or in-vehicle head-up displays, and a use of the two-sided adhesive tape for fixing an in-vehicle component like an in-vehicle head-up display cover.

**Claims**

1. A two-sided adhesive tape comprising:

   a substrate; and
   an acrylic adhesive layer on both surfaces of the substrate,
   the substrate comprising a polyolefin foam containing 30 to 90% by weight of a polypropylene resin which is an ethylene-propylene random copolymer containing propylene as a main component,
   the substrate having a thickness of 1,500 μm or less,
   the foam having a crystal melting peak temperature measured with a differential scanning calorimeter on 100 mg of the polyolefin foam in the air at a rate of temperature rise of 10°C/min of 140°C or higher, an expansion ratio of 15 cm$^3$/g or less, the expansion ratio being defined as the reciprocal value of the density of the foam and the density being determined in conformity with JIS K 6767, and an aspect ratio of bubbles (average bubble size in MD/average bubble size in TD) of 0.9 to 3 measured as specified in the description.

2. The two-sided adhesive tape according to claim 1, wherein the foam has a 25% compression strength in the thickness direction of 50 to 1,000 kPa as measured in conformity with JIS K 6767-7.2.3 (JIS 2009).

3. The two-sided adhesive tape according to claim 1 or 2, having a total thickness of 30 to 2,000 μm.

4. A use of a two-sided adhesive tape according to any one of claims 1 to 3 for fixing an in-vehicle component.

5. The use of a two-sided adhesive tape according to claim 4, wherein the in-vehicle component is a head-up display cover.

**Patentansprüche**

1. Doppelseitiges Klebeband, umfassend:

   ein Substrat, und
   eine Acryl-Klebeschicht auf beiden Oberflächen des Substrates,
   wobei das Substrat einen Polyolefinschaum umfasst, der 30 bis 90 Gewichts-% eines Polypropylenharzes enthält, das ein statistisches Ethylen-Propylen-Copolymer ist, das Propylen als Hauptbestandteil enthält,
   das Substrat ein Dicke von 1500 μm oder weniger aufweist,
   der Schaum eine Kristallschmelz-Spitzentemperatur, gemessen mit einem Differenz-Scanning-Kalorimeter an 100 mg des Polyolefinschaums in der Luft bei einer Termperaturanstiegsrate von 10 °C/min, von 140 °C oder höher, ein Ausdehnungsverhältnis von 15 cm$^3$/g oder weniger, wobei das Ausdehnungsverhältnis als der Kehrwert der Dichte des Schaums definiert ist und die Dichte in Übereinstimmung mit JIS K 6767 bestimmt wird, und ein Aspektverhältnis von Blasen (durchschnittliche Blasengröße in MD/durchschnittliche Blasengröße in TD) von 0,9 bis 3, gemessen wie in der Beschreibung angegeben, aufweist.

2. Doppelseitiges Klebeband nach Anspruch 1, wobei der Schaum eine Druckfestigkeit von 25 % in der Dickenrichtung von 50 bis 1000 kPa, gemessen in Übereinstimmung mit JIS K 6767-7.2.3 (JIS 2009), aufweist.

3. Doppelseitiges Klebeband nach Anspruch 1 oder 2, das eine Gesamtdicke von 30 bis 2000 μm aufweist.

4. Verwendung eines doppelseitigen Klebebandes nach einem der Ansprüche 1 bis 3 zur Befestigung einer fahrzeuginternen Komponente.

**5.** Verwendung eines doppelseitigen Klebebandes nach Anspruch 4,
wobei die fahrzeuginterne Komponente eine Head-up-Display-Abdeckung ist.

**Revendications**

**1.** Bande adhésive double face comprenant :

un substrat ; et
une couche adhésive acrylique sur les deux surfaces du substrat,
le substrat comprenant une mousse de polyoléfine contenant 30 à 90 % en poids d'une résine de polypropylène qui est un copolymère aléatoire d'éthylène-propylène contenant du propylène en tant que composant principal,
le substrat ayant une épaisseur de 1500 $\mu$m ou moins,
la mousse ayant une température de pic de fusion des cristaux, mesurée avec un calorimètre à balayage différentiel sur 100 mg de la mousse de polyoléfine dans l'air à une vitesse de montée en température de 10°C/min, de 140°C ou plus, un taux d'expansion de 15 cm$^3$/g ou moins, le taux d'expansion étant défini par l'inverse de la masse volumique de la mousse et la masse volumique étant déterminée conformément à la norme JIS K 6767, et un rapport d'aspect des bulles (taille moyenne des bulles dans le sens machine / taille moyenne des bulles dans le sens travers) de 0,9 à 3, mesuré comme spécifié dans la description.

**2.** Bande adhésive double face selon la revendication 1, dans laquelle la mousse a une résistance à une compression de 25 % dans la direction de l'épaisseur de 50 à 1000 kPa, telle que mesurée conformément à la norme JIS K 6767-7.2.3 (JIS 2009).

**3.** Bande adhésive double face selon la revendication 1 ou 2, ayant une épaisseur totale de 30 à 2000 $\mu$m.

**4.** Utilisation d'une bande adhésive double face selon l'une quelconque des revendications 1 à 3, pour fixer un composant embarqué dans un véhicule.

**5.** Utilisation d'une bande adhésive double face selon la revendication 4, dans laquelle le composant embarqué dans un véhicule est une protection d'affichage tête haute.

**REFERENCES CITED IN THE DESCRIPTION**

**Patent documents cited in the description**

- JP 2009242541 A
- JP 2009258274 A
- JP 2012214626 A
- JP 2015155528 A
- WO 2005007731 A